# EUROPEAN PATENT APPLICATION

(11) **EP 4 233 575 A1**
(43) Date of publication of application: **30.08.2023**
(21) Application number: 22893974.0
(22) Date of filing: 28.11.2022
(51) Int. Cl.: A24D 1/02

(54) **CIGARETTE WRAPPER USING NANO-CELLULOSE FILM**

(30) Priority: 30.12.2021 KR 20210192486
(71) Applicant: KT & G Corporation, Daejeon 34337 (KR)
(72) Inventor: LEE, Donghyun, Yuseong-gu Daejeon 34128 (KR); CHOI, Ikjang, Yuseong-gu Daejeon 34128 (KR)
(74) Representative: Ter Meer Steinmeister & Partner
(86) International application number: PCT/KR2022/019007
(87) International publication number: WO 2023/128319

(57) **Abstract**

The present disclosure provides a cigarette wrapper including a nanocellulose film, a smoking article comprising the same, and a method for manufacturing the cigarette wrapper including a nanocellulose film.

Through this, there is an advantage in that it is possible to minimize the generation of paper smell and steaming smell of paper-type cigarette paper used in the past, to reduce the smoker's displeasure, and to further improve the satisfaction of smoking.

## Description

### Technical Field

The following description relates to a cigarette wrapper using a nanocellulose film and a tobacco article including the same.

### Background Art

In general, tobacco refers to perennials of the dicotyledonous plant Solanaceae, but recently, tobacco leaves are wrapped in cigarette paper, and a filter part is configured in one side thereof so that it may collectively refers to products manufactured for the purpose of smoking. There are thousands of species of such tobacco worldwide, and they are released in various shapes and forms.

A cigarette consists of a tobacco rod and at least one filter. In addition, the cigarette is surrounded by a paper-type cigarette paper (wrapper). In currently used paper-type cigarette paper, various components such as lignin and hemicellulose, excluding cellulose, are mixed.

Paper-type cigarette paper used in traditional cigarettes and/or electronic cigarettes has an unpleasant odor called 'paper smell', which is generated during smoking due to the uniqueness of its material and the mixture of various other components (especially lignin, hemicellulose, etc.) other than cellulose, so that it gives consumers an unpleasant perception, and further, aerosol-generating articles (cigarette sticks) used in electronic cigarettes not only generate soot but also generate 'steaming smell' during the heating process, causing displeasure to consumers along with the paper smell.

However, it is difficult to obtain only pure cellulose by completely removing the above components in the bleaching process of wood pulp during the manufacturing process of such a paper-type cigarette paper, and further, since cellulose exists in a state in which a crystalline structure and an amorphous structure are mixed and thus has a very low crystallinity, a problem that the paper-type cigarette paper has a lower tensile strength compared to other polymer films arises.

Accordingly, there is a need for research on lowering smokers' displeasure by lowering the paper smell generated by the paper-type cigarette paper.

### Disclosure of the Invention

### Technical Goals

Accordingly, in order to overcome the problems and/or limitations of the existing technologies as described above, an object of the present disclosure is to provide a cigarette wrapper using a nanocellulose film and a tobacco article including the same.

However, the problems to be solved by the present disclosure are not limited to the problems mentioned above, and other problems not mentioned will be clearly understood by those skilled in the art from the description below.

### Technical Solutions

According to one embodiment of the present disclosure, there is provided a cigarette wrapper including a nanocellulose film.

According to one aspect, there is provided a smoking article comprising a cigarette medium part, a filter part, and a wrapper,
wherein the wrapper is a wrapper including a nanocellulose film.

According to another aspect of the present disclosure, there is provided a method for manufacturing a cigarette wrapper including a nanocellulose film, the method comprising the steps of:
1) bleaching wood pulp;
2) converting the fluid into nanoparticles by colliding a fluid containing cellulose of the bleached wood pulp under high pressures; and
3) applying and drying the fluid converted into the nanoparticles to obtain a nanocellulose film.

According to another aspect of the present disclosure, there is provided a method for manufacturing a cigarette wrapper including a nanocellulose film, the method comprising the steps of:
a) bleaching wood pulp;
b) physically dispersing a fluid containing cellulose of the bleached wood pulp;
c) treating sulfuric acid or 2,2,6,6-tetramethyl-1-piperidinyloxy (TEMPO) to obtain a nanoparticle dispersion; and
d) applying and drying the nanoparticle dispersion to obtain a nanocellulose film.

### Effects

The cigarette wrapper using the nanocellulose film according to one aspect of the present disclosure can not only reduce paper-specific paper smell in traditional cigarettes, but also prevent soot when heated due to the high heat resistance of the film in electronic cigarettes so that the unpleasant odor can be reduced.

Further, the cigarette wrapper can be obtained from the same raw materials (wood, vegetation, etc.) as paper, and the component thereof also has biodegradability as cellulose, which is the same as paper. Therefore, the cigarette wrapper has effects of maintaining eco-friendliness and having new properties such as strong tensile strength and high heat resistance through the conversion of cellulose into nanoparticles at the same time.

The effects of the present disclosure are not limited to the above effects, and should be understood to include all effects that can be inferred from the configuration of the invention described in the detailed description or claims of the present disclosure.

### Brief Description of Drawings

FIG. 1 is a view showing that a conventional cigarette paper is replaced by using a wrapper including a nanocellulose film according to one embodiment of the present disclosure in a traditional cigarette.
FIG. 2 is a view showing that a wrapper including a nanocellulose film according to one embodiment of the present disclosure is used for the final outer shell of an aerosol-generating article (cigarette stick) of an existing electronic cigarette.

### Best Mode for Carrying Out the Invention

Hereinafter, embodiments will be described in detail with reference to the accompanying drawings. However, since various changes may be made to the embodiments, the scope of rights of the patent application is not restricted or limited by these embodiments. It should be understood that all modifications, equivalents, and substitutes for the embodiments are included in the scope of the rights.

The terms used in the embodiments are used for the purpose of description only, and should not be construed as an intention to limit the present disclosure. The singular expression includes the plural expression unless the context clearly dictates otherwise. In the present specification, it should be understood that a term such as "comprise", "have", or the like is intended to designate that a feature, a number, a step, an operation, a component, a part, or a combination thereof described in the specification exists, but it does not preclude the possibility of existence or addition of one or more other features, numbers, steps, operations, components, parts, or combinations thereof.

Unless defined otherwise, all terms used herein, including technical or scientific terms, have the same meaning as those commonly understood by those skilled in the art to which the embodiments belong. Terms such as those defined in a commonly used dictionary should be interpreted as having a meaning consistent with the meaning in the context of the related art, and should not be interpreted in an ideal or excessively formal meaning unless explicitly defined in the present application.

Further, in the description with reference to the accompanying drawings, the same components are assigned the same reference numerals regardless of the reference numerals, and overlapping descriptions thereof will be omitted. In the description of the embodiments, if it is determined that a detailed description of a related known technology may unnecessarily obscure the gist of the embodiments, the detailed description thereof will be omitted.

Further, in describing constituent elements of the embodiments, terms such as first, second, A, B, (a), (b), etc. may be used. These terms are only for distinguishing the constituent elements from other constituent elements, and essences, orders, or sequences of the corresponding constituent elements are not limited by the terms.

Constituent elements included in any one embodiment and constituent elements including a common function will be described using the same names in other embodiments. Unless otherwise stated, descriptions described in any one embodiment may also be applied to other embodiments, and detailed descriptions will be omitted in the overlapping range.

Throughout the specification, a 'smoking article' may refer to an article capable of generating an aerosol, such as cigarettes, cigars, etc. The smoking article may comprise an aerosol-generating material or an aerosol-forming substrate. In addition, the smoking article may comprise a solid material (aerosol-generating material) based on tobacco raw materials such as reconstituted tobacco leaf tobacco, cut tobacco, and reconstituted tobacco. The aerosol-generating material may include volatile compounds.

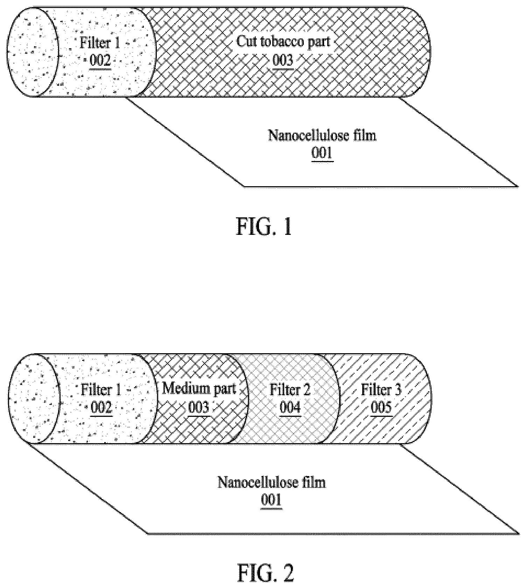

Further, throughout the specification, 'upstream' or 'upstream direction' refers to a direction away from the mouth of a user smoking a smoking article, and 'downstream' or 'downstream direction' refers to a direction approaching the mouth of the user smoking the smoking article. For example, in the smoking article shown in FIG. 1, the cut tobacco part 003 is located upstream or in an upstream direction of the filter part 002.

Furthermore, an 'aerosol-generating system' in the present disclosure may refer to a device for generating an aerosol using an aerosol-generating substrate in order to generate an aerosol that can be directly inhaled into the user's lungs through the mouth of a user. The aerosol-generating system is a non-combustion type tobacco article that is indirectly heated by electrical energy rather than direct combustion. The non-combustion type tobacco article includes a heating type tobacco article and a non-heating type tobacco article. The heating type tobacco article may be an article that sucks ambient air heated through electrical energy to generate an aerosol, and allows smoking to be achieved by a method of emitting the aerosol after such an aerosol is inhaled into the user. Various types of aerosol-generating devices may be further included in addition thereto, and the scope of the present disclosure is not limited to the above-described examples.

According to one embodiment of the present disclosure, there is provided a cigarette wrapper including a nanocellulose film.

Since the nanocellulose film included in the cigarette wrapper according to one embodiment of the present disclosure has high cellulose content and is formed in an almost pure cellulose crystal structure without an amorphous part, it has different physical properties despite being a cellulose material such as paper, and exhibits strong tensile strength and high heat resistance due to strong hydrogen bonds between crystal structures.

Further, since nanocellulose is composed of more than up to 90% of pure crystal particles, when a film made of nanocellulose replaces existing cigarette paper, it is in a state in which the source of paper smell is removed. Therefore, the unpleasant odor caused by the paper smell can be reduced.

Furthermore, when the cigarette wrapper including a nanocellulose film is used in an electronic cigarette, since it has stronger heat resistance due to the strong inter-nanoparticular bonding and the crystal structure, and it has stronger durability to heat than conventional paper, there are advantages of preventing carbonization phenomenon of the material and enabling the steaming smell to be reduced.

Meanwhile, the nanocellulose film constituting the cigarette wrapper according to one embodiment of the present disclosure may have a thickness of 5 to 150 µm, preferably 10 to 100 µm, and more preferably 10 to 50 µm. When the nanocellulose film has the above-described numerical range, it may be possible to effectively maintain the shape of the smoking article, and in particular, it may be possible to prevent leakage or the like of the cigarette medium part (cut tobacco part). In addition, when the cigarette wrapper wraps the entire smoking article as shown in FIG. 2, leaking of liquid components such as a moisturizer to the outside may be reduced.

Further, the nanocellulose film may include one or more nanocelluloses of cellulose nanofibers and cellulose nanocrystals, and when the cellulose nanofibers or cellulose nanocrystals are each used alone as a nanocellulose film, each crystallinity may correspond to 80 % or more.

If the crystallinity is less than the above range, it means that the conversion is not well proceeded from a state of existing wood pulp or the like to nanocellulose so that the formation of nanoparticles of cellulose is not well done. In this case, it may be seen to be difficult to show the unique properties of nanocellulose, such as high tensile strength, strong inter-nanoparticular bonding, alignment properties, and the like.

Further, the cigarette wrapper including a nanocellulose film may comprise a separate additive, and the additive may include at least one of a filler and a combustion improver.

The filler enhances whiteness or opacity, controls porosity, improves tactile feel and printability, and additionally has a function of reducing the paper smell. An example of the filler having such a function may include calcium carbonate (CaCO₃).

Further, the combustion improver serves to promote or inhibit combustion, and examples thereof may include Na-citrate or K-citrate.

The cigarette wrapper including a nanocellulose film has an effect that it is possible to secure the smoking taste, combustibility, digestibility, and manufacturing workability of the cigarette by simultaneously comprising such filler and combustion improver.

According to another embodiment of the present disclosure, there is provided a smoking article comprising a cigarette medium part, a filter part, and a wrapper,
wherein the wrapper is a wrapper including a nanocellulose film.

The cigarette medium part typically contains a tobacco material containing nicotine, such as leaf tobacco, and may additionally contain an excipient such as a binder, other additives, a flavoring agent, or the like. As an example, a cigarette medium contained in the cigarette medium part according to the present disclosure may be prepared in the form of granules containing a tobacco material, an excipient, and the like.

In the present disclosure, the tobacco material is an aerosol-generating material, and may be tobacco leaf pieces, tobacco stems, tobacco dust generated during tobacco treatment, and/or leaf segment strips of tobacco leaves. The tobacco leaves may be at least one selected from flue-cured tobacco, Burley tobacco, Oriental tobacco, cigar leaves, and toasted tobacco, but are not limited thereto.

Meanwhile, the filter part may comprise a capsule containing an incense therein, or may further comprise a moisturizer or the like.

In addition, the wrapper of the smoking article according to one embodiment of the present disclosure may include a cigarette medium part wrapper, a filter part wrapper, a tipping wrapper, etc., and it is preferable that the wrapper including the nanocellulose film is a cigarette medium part wrapper or a wrapper wrapping the entire smoking article in terms of enabling the paper smell or steaming smell generated during the smoking process of a traditional cigarette and an electronic cigarette to be effectively reduced.

Further, as described above, the smoking article according to one embodiment of the present disclosure may correspond to a combustion type or non-combustion heating type cigarette in that it is used as a stick of the traditional cigarette or the electronic cigarette.

Hereinafter, a method for manufacturing a cigarette wrapper according to one embodiment of the present disclosure will be described.

The cigarette wrapper including a nanocellulose film according to the present disclosure may be manufactured by a physical method of the following steps 1) to 3) or a chemical method of the following steps a) to d):
1) bleaching wood pulp;
2) converting the fluid into nanoparticles by colliding a fluid containing cellulose of the bleached wood pulp under high pressures; and
3) applying and drying the fluid converted into the nanoparticles to obtain a nanocellulose film;
   a) bleaching wood pulp;
   b) physically dispersing a fluid containing cellulose of the bleached wood pulp;
   c) treating sulfuric acid or 2,2,6,6-tetramethyl-1-piperidinyloxy (TEMPO) to obtain a nanoparticle dispersion; and
   d) applying and drying the nanoparticle dispersion to obtain a nanocellulose film.

In general, as wood pulp, which is mainly composed of bulky cellulose lumps, goes through a bleaching process, mixed components such as hemicellulose including lignin, mannose, and xylose which are contained along with decolorization are partially reduced, but they cannot be completely removed. However, in the case of nanocellulose, as described in the steps 1) to 3) or the steps a) to d), other mixed components such as an amorphous cellulose part, lignin, hemicellulose, etc. except for pure cellulose crystal in the processes of conversion into nanoparticles as well as bleaching are mostly removed. As such, one having cellulose as a main component is the same as paper-type cigarette paper, but a film made of nanocellulose from which other mixed components are removed has tensile strength and biodegradability.

Meanwhile, cellulose can be physically or chemically pulverized to a small size such as nanoparticles by proceeding with the step 2) or the steps b) and c), and the nanocellulose in the step 3) or the step d) can be applied in the same manner as a general polymer film manufacturing method.

Examples of the polymer film manufacturing method may include one or more methods selected from the group consisting of drop casting, roll coating, knife coating, and bar coating, and the examples listed above are representative examples. However, they are not limited thereto as long as they are a method capable of maintaining the shape by applying the material dispersion thinly over a wide area, and then subjecting it to the drying process to form a bond between nanoparticles.

Meanwhile, since the nanocellulose dispersion can be prepared as a water-soluble one, it has the advantage of having stability and eco-friendliness at the same time during operation unlike petroleum-based polymers in which other organic solvents are used, and the nanocellulose film manufactured in this way can be easily applied to the manufacturing process of cigarettes and electronic cigarette smoking articles if a roll cut to the width and length used for manufacturing existing cigarette paper is manufactured.

Although the above-mentioned embodiments have been described by limited drawings, those skilled in the art may apply various technical modifications and alterations based on the above-mentioned description. For example, appropriate results can be achieved although described techniques are carried out in a different order from a described method, and/or described elements of a system, structure, apparatus, circuit, etc. are combined or mixed in a different form from the described method, or replaced or substituted with other elements or equivalents.

Therefore, other embodiments, other examples, and equivalents to patent claims belong to the scope of the patent claims to be described later.

### [Description of reference numerals]

001: Nanocellulose film
002, 004, 005: Filter part
003: Cigarette medium part (cut tobacco part)

## Claims

1. A cigarette wrapper including a nanocellulose film.

2. The cigarette wrapper of claim 1, wherein the nanocellulose film has a thickness of 5 to 150 µm.

3. The cigarette wrapper of claim 1, wherein the nanocellulose film includes one or more nanocelluloses of cellulose nanofibers and cellulose nanocrystals.

4. The cigarette wrapper of claim 3, wherein the cellulose nanofibers and cellulose nanocrystals have a crystallinity of 80 % or more.

5. The cigarette wrapper of claim 1, wherein the cigarette wrapper comprises at least one of a filler (mineral filler) and a combustion improver (burning chemical).

6. The cigarette wrapper of claim 5, wherein the filler is calcium carbonate (CaCO₃), and the combustion improver is Na-citrate or K-citrate.

7. A smoking article comprising a cigarette medium part, a filter part, and a wrapper, wherein the wrapper is a wrapper including a nanocellulose film.

8. The smoking article of claim 7, wherein the wrapper including the nanocellulose film is a cigarette medium part wrapper or a wrapper wrapping the entire smoking article.

9. The smoking article of claim 7, wherein the filter part comprises a moisturizer, or a capsule containing an incense.

10. The smoking article of claim 7, wherein the smoking article is a combustion type cigarette or a non-combustion heating type cigarette.

11. A method for manufacturing a cigarette wrapper including a nanocellulose film, the method comprising the steps of:
1) bleaching wood pulp;
2) converting the fluid into nanoparticles by colliding a fluid containing cellulose of the bleached wood pulp under high pressures; and
3) applying and drying the fluid converted into the nanoparticles to obtain a nanocellulose film.

12. A method for manufacturing a cigarette wrapper including a nanocellulose film, the method comprising the steps of:
a) bleaching wood pulp;
b) physically dispersing a fluid containing cellulose of the bleached wood pulp;
c) treating sulfuric acid or 2,2,6,6-tetramethyl-1-piperidinyloxy (TEMPO) to obtain a nanoparticle dispersion; and
d) applying and drying the nanoparticle dispersion to obtain a nanocellulose film.

13. The method of claim 12, wherein the step d) is performed by using one or more methods selected from the group consisting of drop casting, roll coating, knife coating, and bar coating.
